# EUROPEAN PATENT APPLICATION

(11) **EP 4 099 248 A1**
(43) Date of publication of application: **07.12.2022**
(21) Application number: 21461548.6
(22) Date of filing: 31.05.2021
(51) Int. Cl.: G06Q 20/06

(54) **A SYSTEM AND METHOD FOR TRADING CRYPTOCURRENCIES, TOKENIZED ASSETS AND/OR FIAT CURRENCIES ON A PERMISSION-LESS UNIFIED AND INTEROPERABLE BLOCKCHAIN DISTRIBUTED LEDGER SYSTEM WITH ANCHOR-OF-TRUST ORGANIZATIONS**

(71) Applicant: Billon Sp. z o.o., 00-021 Warszawa (PL)
(72) Inventor: HOROSZCZAK, Andrzej, Warszawa (PL); KALUZA, Robert, Warszawa (PL); NISKI, Tomasz, Warszawa (PL); CZERWINSKI, Remigiusz, Warszawa (PL)
(74) Representative: Kancelaria Eupatent.pl Sp. z.o.o

(57) **Abstract**

A method for enabling trade of cryptocurrencies, tokenized assets and/or fiat currencies on a single distributed ledger system (100) comprising a plurality of nodes (110, 120), wherein: at least some of the nodes are minting nodes (110); and at least some of the nodes are user nodes (120). The method comprises at the minting nodes (110): minting (413) digital assets (500), each minted digital asset comprising data on an asset type (502), an asset value (503) and a first owner (508); at the user nodes (120): requesting (701) or accepting (702) an exchange transaction to exchange digital assets with another user.

## Description

### COPYRIGHT NOTICE

A portion of the disclosure of this patent document contains material to which a claim for copyright is made. The copyright owner has no objection to the facsimile reproduction by anyone of the patent document or the patent disclosure, as it appears in the Patent and Trademark Office patent file or records, but reserves all other copyright rights whatsoever.

### FIELD OF THE INVENTION

The present invention relates to distributed ledger technology (DLT), in particular to a method and system that allows trading different cryptocurrencies on a single distributed ledger system.

### BACKGROUND

Advanced in blockchain and distributed ledger technology (DLT) resulted in development of various cryptocurrencies (also called cryptoassets or altcoins), such as Bitcoin, Ethereum, Litecoin etc.

Current standard systems allow to trade one type of the cryptoassets.

There are known cryptocurrency exchange systems where users can trade cryptocurrencies for other assets, such as conventional fiat money or other electronic currencies. However, the exchange systems known so far have a number of limitations.

In a typical cryptocurrency exchange system, the assets are guaranteed by the owner of the exchange system, which is usually not a trusted institution that is regulated by state laws, therefore such system poses an increased financial risk to its users.

Existing blockchain cryptographic algorithms utilizing mining concepts based on proof-of-work or proof-of-stake used by cryptocurrencies have significant scalability and throughput issues. Distributed systems for traditional cryptocurrencies are significantly slower than traditional financial systems based on fiat money, which limits the volume of cryptocurrency transactions that can be processed at the same time. This limits a wide adoption of such systems.

Importantly, asset creation in traditional cryptocurrency blockchain systems is based on mining algorithms that require a significant amount of computing power and/or data storage requirements which requires huge electricity consumption and creates a negative world-wide impact on the environment.

### SUMMARY OF THE INVENTION

There is a need to provide a method and system to allow trading different cryptocurrencies on a single distributed ledger system that would solve at least some of the problems mentioned in the background section.

In one aspect, the invention relates to a method for enabling trade of cryptocurrencies, tokenized assets and/or fiat currencies on a single distributed ledger system comprising a plurality of nodes. At least some of the nodes are minting nodes and at least some of the nodes are user nodes. The method comprises, at the minting nodes, minting digital assets, each minted digital asset comprising data on an asset type, an asset value and a first owner. The method also comprises, at the user nodes : requesting or accepting an exchange transaction to exchange digital assets with another user; checking if the exchange transaction can be performed; confirming that the transaction can be performed; amending the transferred digital assets by signing the transferred digital assets with user's private key as the previous owner signature; and amending the received digital assets by adding information that the user is the current owner and signing the received digital assets with user's private key as the current owner signature.

The overall trust level to the system is dependent on the trust level of the entities that operate the minting nodes. Therefore, the system can be designed to allow only reputable entities, such as trusted financial organizations, to operate as the minting nodes, which provides high level of security to the users of the system. The digital assets that are available for trade (including exchange) in the system are minted by the trusted minting nodes. The digital assets store information about their complete history, including the initial owner and the consecutive owners. Therefore, each digital asset can be verified for its history of transaction and the transaction security level is high. Therefore, this allows implementing permission-less single and interoperable blockchain distributed ledger system.

The minting node can be operated by a trusted entity that satisfies system-defined regulatory requirements. Thereby, the users can easily verify the security of the system by checking which types of entities can operate as the minting nodes that are responsible for minting of digital assets. Therefore, although the system is permissionless for users, the minting nodes are operated by well-known and/or trusted organizations that serve as anchors of trust for digital assets represented on the DLT.

The method may comprise minting digital assets at the minting node upon receiving a notification of deposit of funds or cryptocurrency or certificate of an asset by a user to the entity that governs the minting node. This way, the total amount of digital assets that is in the system is covered by the deposits of fiat currencies or cryptocurrencies or asset certificates held by the entities that govern the minting nodes.

Checking if the exchange transaction can be performed may include checking if the other user has enough digital assets. This limits the risk of a trade for unbalanced digital assets.

The method may further comprise providing information on user wallet after completion of the exchange transaction and distributing user wallet information to the distributed ledger system. Providing user wallet information allows for quick verification of user account before performing next transaction. The user wallet information can be at any time verified by any other user by monitoring the transactions history available at the digital assets data.

The distributed ledger system can be based on a blockchain and the information on digital assets and user wallets is stored as ledger data propagated by messages in accordance with DLT protocol.

The method may further comprise terminating digital assets by removing digital assets from the circulation on DLT. The termination process can be considered as a reverse process to minting. The termination is performed by the clearing module.

The method may further comprise, at the user nodes, observing and real-time auditing of the minting and termination activity of the minting nodes operated by the anchor-of-trust organizations. This increases the safety of the system.

In another aspect, the invention relates to a computer system comprising: at least one nontransitory processor-readable storage medium that stores at least one of processor-executable instructions or data; and at least one processor communicably coupled to the at least one nontransitory processor-readable storage medium, wherein the at least one processor is configured to perform the steps of the method as described herein, corresponding to the functionality of the minting node or of the user node.

In another aspect, the invention relates to a computer program product comprising instructions which, when executed on a computer, cause the computer configured as the minting node or as the user node to perform the corresponding steps of the method as described herein.

### BRIEF DESCRIPTION OF THE DRAWINGS

Embodiments of the present disclosure are best understood from the following detailed description of exemplary embodiments when read in conjunction with the accompanying drawings. Included in the drawings are the following Figures:
Fig. 1 illustrates a structure of the system in which the present method can be implemented;
Fig. 2 illustrates a functional architecture of a minting node;
Fig. 3 illustrates a user verification message;
Fig. 4 illustrates a procedure for minting a new digital asset;
Fig. 5 illustrates a digital asset structure;
Fig. 6 illustrates user wallet data structure;
Fig. 7 illustrates a flowchart of an exchange transaction process;
Fig. 8 illustrates an example of changes in blockchain to create new users and reflect exchange transactions;
Fig. 9 illustrates an example of a computer system.

### DETAILED DESCRIPTION OF EMBODIMENTS

Reference will now be made in detail to the embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, and components have not been described in detail as not to unnecessarily obscure aspects of the present invention.

The present disclosure is to be considered as an exemplification of the invention, and is not intended to limit the invention to the specific embodiments illustrated by the Figures or description below.

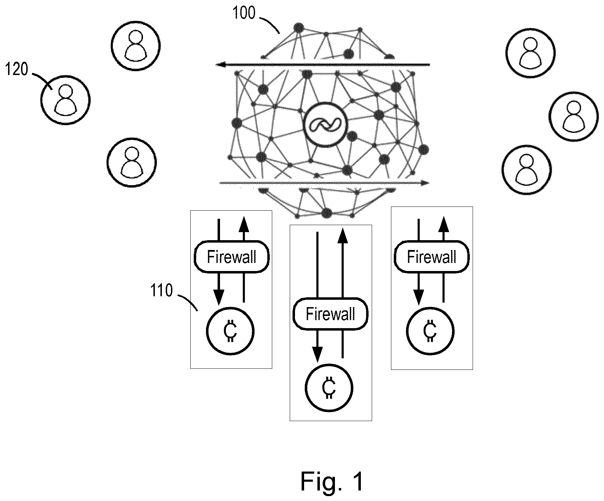

Fig. 1 illustrates a structure of the system in which the present method can be implemented. The system 100 is a distributed ledger system 100 that comprises a plurality of nodes which act as a collective and provide an immutable record of the legger transactions. The distributed ledger system 100 can be implemented using blockchain technology.

There are at least two types of nodes within the system: minting nodes 110 and user nodes 120.

In general, the nodes are implemented by a software application executed on a computer device, such as a server computer, a personal computer, a smartphone, a network computing device (such as a router) or any IOT (Internet-of-Things) device that is connected to a computer network (such as the Internet) and has an address (such as an IP address). The computer device may be operated by one of several known operating systems, such as Windows, Linux, iOS, Android etc. Apart from providing the node-specific functionality as described below for particular node types, every node supports the system 100 by maintaining a partial copy of blockchain data. Therefore, the nodes 110, 120 are individual parts of the larger structure, namely a DLT network system 100.

The user node 120 can be implemented by installing a software application on a user device (such as a personal computer or a smartphone) that allows the user to connect to the system 100 and provides an interface for the user to perform transactions within the system 100, including exchange transactions, with other nodes of the system. The user nodes 120 are operated by users that have freely entered the system. The user nodes 120 allow the user to handle minted digital assets and to transact with other nodes 110, 120 without involvement of the trusted party . Each transaction is approved (validated) by user nodes 110, however only the transaction parties can read private data associated with the transaction.

The minting node 110 is a special type of a node controlled by a trusted entity. For example, the trusted entity can be a bank or other financial institution whose operation is regulated by state banking laws or any other law defining regulations for other financial organizations and can serve as a generally accepted anchor-of-trust for the public at large. In general, the system 100 policy may define the minimum requirements for an entity to be regarded as a trusted entity, so that the users know exactly what type of entities guarantee safety of assets within the system. For example, the system policy may be defined such that it is compliant with regulations of a state wherein the system is implemented or where the users of the system reside (for example, with European Union regulations). The minting nodes can be implemented by installing a software system at a trusted entity infrastructure (such as one or more server computers). The minting node 110 allows to mint new digital assets in the system. The minting node 110 is linked to cryptocurrency blockchain wallets at external systems, such as Bitcoin, Ethereum, Litecoin etc. When a new cryptocurrency is added by a user to the cryptowallet 119 or new money arrive on fiat bank account 118 linked via API to the minting node 110 or an asset certificate is deposited at the trusted organization , a new digital asset is minted on the system 100 and delivered to the individual user's node 120. The minting nodes 110 can be linked to multiple cryptocurrency wallets and fiat bank accounts, therefore they are capable of minting multiple digital asset types (this provides full interoperability and exchangeability of different cryptocurrencies). Therefore, the fiat bank accounts 118 and cryptowallets 119 play the role of the store of value for digital assets minted by the minting nodes 120 into the system 100.

Each minting node 120 has a plurality of cryptographic key pairs (public key and private key). First, the minting node 120 has a main key pair that identifies the minting node 120. Moreover, the minting node 120 has individual asset key pairs, one for each digital asset type that can be minted by that minting node 120. All the public keys of the minting nodes 120 are widely distributed between the users of the system, so that each user knows all the public keys and uses them to validate the digital assets within the system.

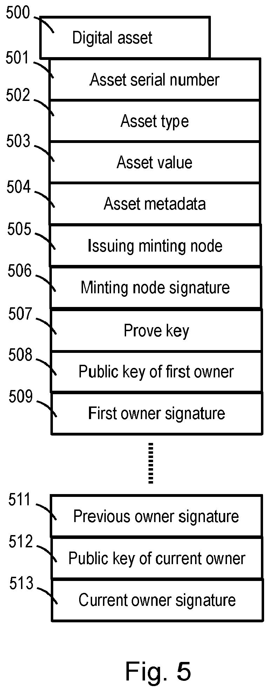

The minting nodes 110 are privileged nodes of the system 100 that have the ability to mint digital assets for use within the system - thus, the minting nodes 110 perform a minting (issuing) process that includes minting new digital assets having a structure shown in Fig. 5. All of the minting node activities are recorded on DLT. Therefore, an important role of the minting node 110 is to control the supply of assets to the system. The minting node 110 is supposed to mint digital assets only in case when that minting node 110 can cover the digital asset by storing the equivalent in cryptowallets 119 or fiat bank accounts 118. Therefore, the system trust is anchored by trust to the organization operating that the minting nodes 110 are being operated according to system policy. However, all the trading operations of the system are trust-less, that is all of the subsequent peer-to-peer transactions between user nodes avoid any usage of a trusted-third-party. Moreover, since all minting and redemption activities of the minting nodes are public, visible and immutable, there is little incentive for the trusted organization to misbehave, as any audit will easily pinpoint any current or historical discrepancies between ledger published data and the balance of fiat funds actually held by the organization, or record of tokenized asset held in trust by the organization. Additionally, the minting nodes 110 play a crucial role to allow the system 100 to comply with regulatory requirements as the responsible party for instance as Electronic Money Institution (for fiat currencies) or as REIT (for real estate assets), etc.

The user nodes 120 may access the system 100 via public network, such as the Internet.

The minting nodes 111 may connect to the DLT system 100 via firewalls 111 in order to increase system security, in particular to limit unauthorized access to the minting nodes 111.

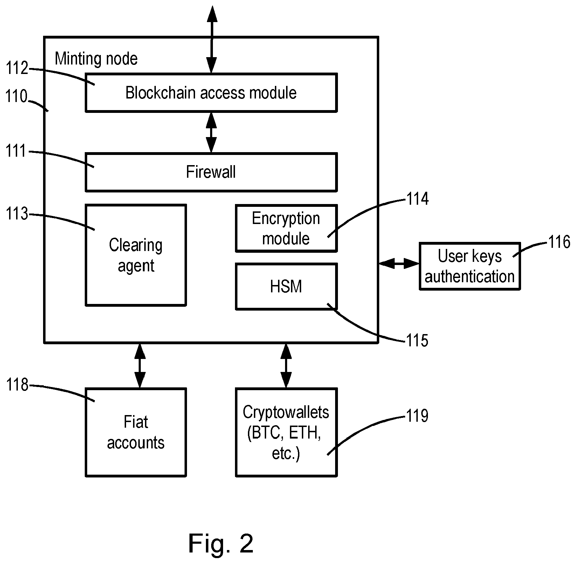

Fig. 2 illustrates functional architecture of a minting node 110. It comprises the following modules.

A blockchain access module 112 is configured to communicate between the minting node 110 and other nodes of the system 100, in particular the user nodes 120 by means of the blockchain access module 112 via the firewall 111. This includes finding users, delivering funds (encrypted digital assets issued by the encryption module 114 to the end user) and terminating digital assets (collecting digital assets from user nodes 120 and sending it for termination by a clearing agent 113).

A combination of the minting and termination procedures allows to adjust the system to supply and demand forces without the financial risk associated with run on the currency.

Additionally, the blockchain access module 112 is configured to sign newly minted digital assets and to verify the correctness of digital assets during termination, as will be described in details below.

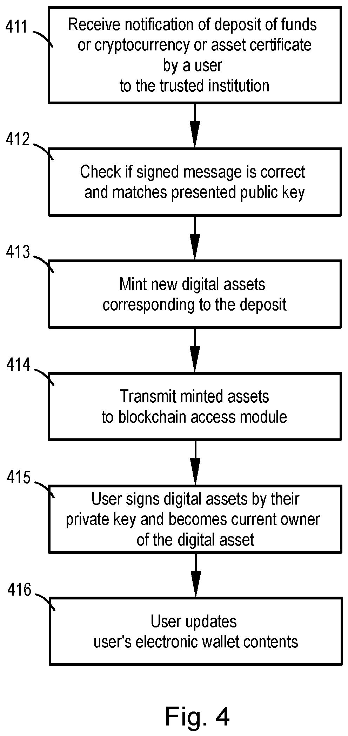

The encryption module 114 is an application that can be installed within a data center of the trusted entity. It operates in combination with a hardware security module (HSM) 115. It generates a genesis block for each digital asset subchain and marks the initial ownership of the digital asset by the particular minting node 110. Therefore, this module is configured to, based on information received from the core financial system of the trusted entity, issue new digital assets to the system. Fig. 4 illustrates a procedure for minting a new digital asset.

The minting node 120 is connected with a module 116 for authenticating user keys. The module is configured to receive a user's public key and a message signed by the user's private key to verify the compliance of the provided user's public key with that user.

A clearing agent 113 module is configured to provide functionality of transferring funds outside the system, to external user accounts, either fiat currency (such as USD, EUR, etc.) bank accounts 118 or cryptowallets (such as BTC, ETH, etc.). During redemption of funds, the clearing agent 113 verifies each digital asset that is to be cleared.

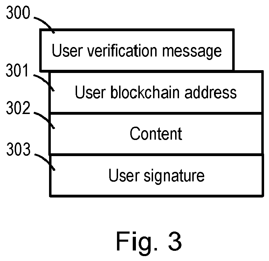

Fig. 3 illustrates a user verification message 300 that is published on the digital ledger system 100 when a new user enters the system. The message includes a user's blockchain address (for example, user public key(s)) and some content 302 that are both signed by the user's private key 303, so that the user can be verified later within the system.

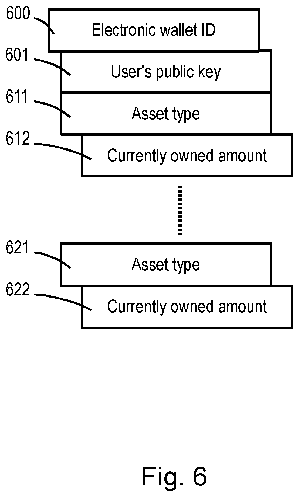

Fig. 4 illustrates a method for minting (in other words, issuing) a digital asset certificate (DLT attestation), the structure of which is shown in Fig. 5. The digital asset certificates are minted by the minting nodes 110 based on off-the-distributed-ledger assets that the minting node 110 (run by a trusted entity) can cover, for example by storing corresponding fiat or cryptocurrency at user fiat bank accounts 118 or cryptowallets 119 or legally recognized certificates of a physical or an intellectual asset. The procedure is initiated in step 411 when fiat funds, cryptocurrency or asset certificate is deposited by the user to an internal fiat bank account 118 or cryptowallet 119. Next, in step 412 the trusted entity checks if the signed message is correct and matches the presented public key. Upon successful validation, in step 413 new digital assets are minted in amount that corresponds to the amount of funds deposited by the user. In step 414 the minting node signs the digital asset by the private key of the minting node in field 506, to certify that step 411 was made under the authorization of the trusted organization that operates the minting node. Next, in step 414 the digital assets, each with a globally unique identifier, are transmitted to the blockchain for broadcast and recording by user nodes. In step 415 the user checks verifies the signatures on the digital asset that have been applied by the minting node and if correct, the user signs the digital assets ownership change message by signing them with user's private key to become the current owner of the digital asset. Next, user wallet data (as shown in Fig. 6) are updated in step 416, for example by the user entering the amount and identifier of digital assets just received to the wallet data.

On the other hand, if a user wishes to redeem the digital assets, the user may contact the minting node with a request to redeem the digital asset. The minting node checks whether all signatures on the message changing digital asset ownership to its final owner e.g. back to the minting node are correct and the message propagation has followed the DLT protocol rules. Once this is confirmed the minting node adds the corresponding amount to the user's fiat bank account 118 or external cryptowallet 119. The corresponding digital asset is then removed from the system by sending it to other cyprowallet 119 provided by the user or the money transfer is sent from the fiat bank account 118

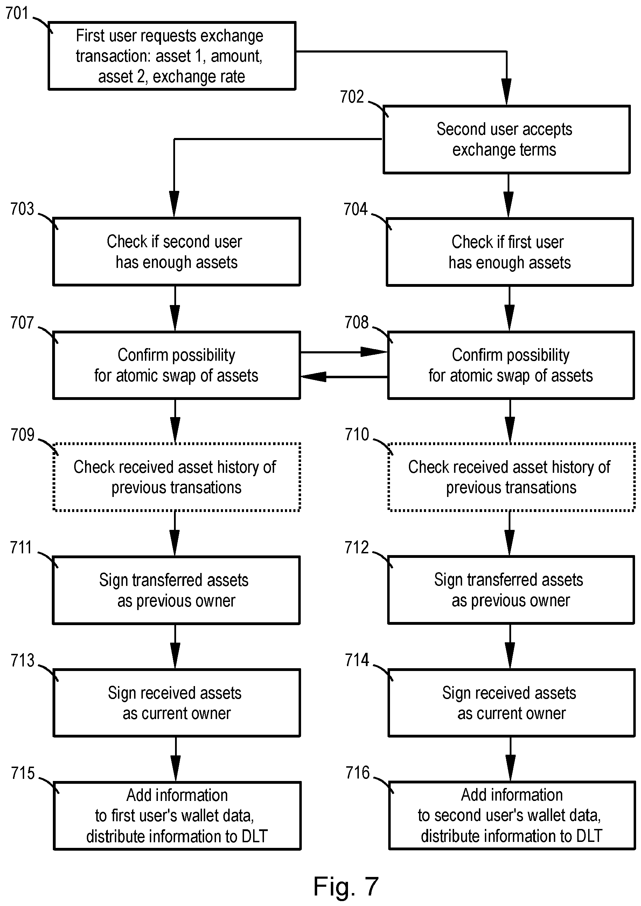

Fig. 5 illustrates a digital asset structure 500. This is stored in the blockchain system 100 in a form of a subchain comprising a genesis block created upon minting the digital asset and following blocks that are added as the digital asset changes owners. The digital asset 500 comprises an asset serial number 501 that is a unique identifier among all digital assets within the system. An asset type 502 field defines a fiat currency (USD, EUR, etc.) or a cryptocurrency (BTC, ETH, etc.) or an asset certificate to which this digital asset corresponds or another system-specified type. An asset value 503 field defines what is the unit value of that digital asset (such as one cent, one millionth of BTC, etc.). An asset metadata field 504 may define further digital asset data (such as date of issuance, validity date, business data describing the digital asset etc.). An issuing minting node field 505 defines the trusted entity that minted that digital asset and is accompanied with a signature field 506 of that trusted entity (i.e. the private key of the minting node 120 that minted the digital asset) in order to allow validation of the digital asset. Moreover, a prove key 507 of a particular digital asset can be minted, which can be a signature of the minting node that is of a different type than the first signature. For example, one of the keys 506, 507 can be a key associated with the blockchain access module 112 and the other key may be the key associated with the HSM module 115. Next, a first user is defined in field 508 by that user's public key, accompanied by that first user's signature 509. Fields 501-509 may form the logical genesis block and the following fields may be defined by consecutive logical blocks corresponding to that digital asset. Only the digital asset that has at least three signatures 506, 507, 509 is a valid digital asset in the system 100. The following fields define change of ownership of the digital asset and comprise a previous owner signature 511, a public key of the current owner 512 and a current owner signature 513. Fields 511-513 are added to the digital asset record of ownership each time the digital asset is traded and its owner changes, as explained in Fig. 7.

Fig. 6 illustrates a structure of a user's electronic wallet 600, identified by a user's public key 601. The wallet comprises one or more entries defining an asset type 611, 621 (USD, EUR, BTC, ETH, etc.) and currently owned amount 612, 622 of that digital asset in the wallet. The contents of the electronic wallet 600 are updated by the user node 120 upon completing a transaction so that the wallet allows quick checkup of the digital assets of particular user, e.g. before entering a transaction. However, the contents of the wallet can be verified all the time by DLT system to check the data integrity and detect potential system frauds by analysis of transactions performed by that user or transactions on particular digital assets claimed in the wallet, in case a more secure checkup of the information is necessary.

Fig. 7 illustrates a flowchart of an exchange transaction process that can be executed between nodes 110, 120 in the system, such as between two user nodes 120 or a user node and a minting node 110. In step 701 a first user initiates a request for an exchange transaction, by indicating the amount of the first asset type to be exchanged, the second currency to which the first asset type is to be exchanged and an exchange rate. The exchange rate may be user-defined or may be configured to be automatically generated by exchange rate service that provides current exchange rates of digital assets based on overall market data. The request may be placed on an exchange platform that may collect exchange offers from various users, such as individual users that offer one-time transactions or institutional users (such as financial institutions) that continuously offer exchange transactions. In step 702, a second user indicates an intention to accept the exchange terms and to enter into the exchange agreement. Then, both users verify each other's credibility: in steps 703, 704 they check whether the other user has enough funds in their digital assets wallet to enter into the transaction. Upon positive verification, both users confirm in steps 707, 708 the possibility for atomic swap of digital assets. In steps 709, 710 the users may check the history of previous transactions related to the digital asset to be received, such as to accept only digital assets that have a reliable history of transactions in its subchain by verification of signatures of previous holders of that digital asset. Next, in steps 711, 712 each side of the transaction signs their digital assets to be transferred as the previous owner (in field 511) and in steps 713, 714 each side of the transaction signs their digital assets to be received as the current owner (in fields 512, 513). Next, the users update information on their digital asset wallets, by deducting the digital assets that have been transferred out and adding digital assets that have been transferred in and update the wallet data in the distributed ledger system 100 (for example, by broadcasting their wallet data subchains across the blockchain system).

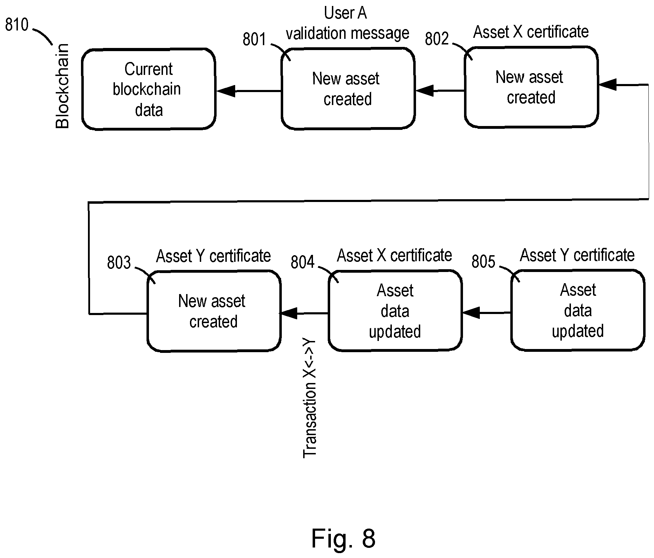

Fig. 8 illustrates an example of the messages related to changes in asset ownership and user creation on the distributed ledger system 100. When user A joins the system, a message 801 proving that user has created its own pair of public-private keys is published on the ledger (by the new user node). When user A deposits assets to the minting node, the minting node creates a special privileged message 802 that a new asset is minted and distributes this message to the plurality of user nodes according to the DLT protocol. The user accepts that message 802 only if it is signed by an authorized minting node. Similarly, a special privileged message 803 can be created for other digital asset Y (which may belong to another user). When user A agrees on an exchange transaction with another user to exchange digital asset X for digital asset Y, the digital asset X certificate is updated 804 and the digital asset Y certificate is updated 805 by signing them by previous owners and current owners.

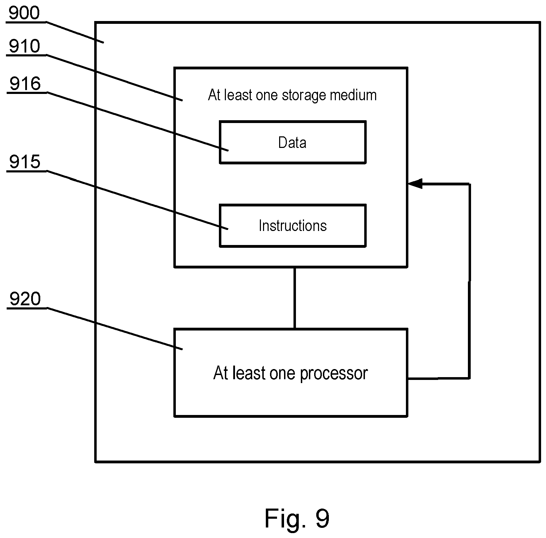

The functionality described herein can be implemented in computer systems 900, such as shown in Fig. 9. These computer systems may function to operate the minting node 110 or the user node 120. They may be implemented as single machines or a plurality of machines connected over a network. An example computer system 900 may include at least one nontransitory processor-readable storage medium 910 that stores at least one of processor-executable instructions 915 or data 916; and at least one processor 920 communicably coupled to the at least one nontransitory processor-readable storage medium 910. The at least one processor 920 may be configured to (by executing the instructions 915) perform the methods presented herein, in particular the methods presented in Figs. 4 and 7.

While the present invention has been described in terms of particular embodiments and applications, in both summarized and detailed forms, it is not intended that these descriptions in any way limit its scope to any such embodiments and applications, and it will be understood that many substitutions, changes and variations in the described embodiments, applications and details of the method and system illustrated herein and of their operation may be made by those skilled in the art without departing from the spirit of this invention.

## Claims

1. A method for enabling trade of cryptocurrencies, tokenized assets and/or fiat currencies on a single distributed ledger system (100) comprising a plurality of nodes (110, 120), wherein:
- at least some of the nodes are minting nodes (110); and
- at least some of the nodes are user nodes (120);
the method comprising:
- at the minting nodes (110):
- minting (413) digital assets (500), each minted digital asset comprising data on an asset type (502), an asset value (503) and a first owner (508);
- at the user nodes (120):
- requesting (701) or accepting (702) an exchange transaction to exchange digital assets with another user;
- checking (703, 704) if the exchange transaction can be performed;
- confirming (707, 708) that the transaction can be performed;
- amending (711, 712) the transferred digital assets (500) by signing the transferred digital assets with user's private key as the previous owner signature (511); and
- amending (713, 714) the received digital assets (500) by adding information that the user is the current owner (512) and signing the received digital assets with user's private key as the current owner signature (513).

2. The method according to claim 1, wherein the minting node (110) is operated by a trusted entity that satisfies system-defined regulatory requirements.

3. The method according to any of previous claims, comprising minting (403) digital assets (500) at the minting node (110) upon receiving a notification of deposit of funds or cryptocurrency or certificate of an asset by a user to the entity that governs the minting node (110).

4. The method according to any of previous claims, wherein checking if the exchange transaction can be performed includes checking (703, 704) if the other user has enough digital assets.

5. The method according to any of previous claims, further comprising providing (715, 716) information on user wallet (600) after completion of the exchange transaction and distributing user wallet information to the distributed ledger system (100).

6. The method according to any of previous claims, wherein the distributed ledger system is based on a blockchain and the information on digital assets and user wallets is stored as ledger data propagated by messages in accordance with DLT protocol.

7. The method according to any of previous claims, further comprising terminating digital assets (500) by removing digital assets from the circulation on DLT.

8. The method according to any of previous claims, further comprising, at the user nodes (120), observing and real-time auditing of the minting and termination activity of the minting nodes (110) operated by the anchor-of-trust organizations.

9. A computer system (900) comprising:
- at least one nontransitory processor-readable storage medium (910) that stores at least one of processor-executable instructions (915) or data (916); and
- at least one processor (920) communicably coupled to the at least one nontransitory processor-readable storage medium (910), wherein the at least one processor (920) is configured to perform the steps of the method of any of previous claims corresponding to the functionality of the minting node (110) or of the user node (120).

10. A computer program product comprising instructions which, when executed on a computer, cause the computer configured as the minting node (110) or as the user node (120) to perform the corresponding steps of the method of any of claims 1-8.
